# EUROPEAN PATENT APPLICATION

(11) **EP 3 909 493 A1**
(43) Date of publication of application: **17.11.2021**
(21) Application number: 19908926.9
(22) Date of filing: 20.11.2019
(51) Int. Cl.: A47L 11/28

(54) **CONTROL METHOD AND APPARATUS FOR MOPPING ROBOT, DEVICE, AND STORAGE MEDIUM**

(30) Priority: 08.01.2019 CN 201910017398
(71) Applicant: Yunjing Intelligence Technology (Dongguan) Co., Ltd., Dongguan, Guangdong 523808 (CN)
(72) Inventor: WU, Yihao, Dongguan, Guangdong 523808 (CN); WU, Zhuorui, Dongguan, Guangdong 523808 (CN); ZHANG, Yupeng, Dongguan, Guangdong 523808 (CN)
(74) Representative: Osterhoff, Utz
(86) International application number: PCT/CN2019/119771
(87) International publication number: WO 2020/143337

(57) **Abstract**

Disclosed is a method for controlling a mopping robot including a mopping member for mopping a floor. The method includes: if the mopping robot has mopped a first area in a first state with the mopping member at a target degree of cleanliness, performing a mopping member cleaning operation; if the mopping robot has mopped a second area in a second state with the mopping member at the target degree of cleanliness, and if the mopping member satisfies the cleaning condition, performing the mopping member cleaning operation.

## Description

### CROSS-REFERENCE TO RELATED APPLICATIONS

This application claims priority to Chinese Patent Application No. 201910017398.2, filed on January 8, 2019, entitled "Control Method for Mopping Robot, Apparatus, Device, and Storage Medium", which is hereby incorporated by reference in its entirety.

### TECHNICAL FIELD

The present application relates to the technical field of smart home, in particular to a method, a device, and an apparatus for controlling a mopping robot and a storage medium.

### BACKGROUND

With the continuous development of smart home technology, various smart home devices emerge as the times require, and mopping robots are one of them. In situations such as household indoor cleaning and large-scale place cleaning, the mopping robots can be set to automatically clean the floor. Therefore, how to control the mopping robots is the key to ensure a cleaning effect.

In related art, a moving track of a mopping robot is preset, and the mopping robot is controlled to move according to the preset moving track, to clean the floor through a mopping member disposed on the mopping robot. Then, it is up to the user to decide when to clean the mopping member. When the user needs to clean the mopping member, the user takes off the mopping member from the mopping robot and then manually cleans the mopping member.

However, the above control method is not intelligent and flexible enough, thus affecting the cleaning effect to the floor.

### SUMMARY

The embodiments of the present application provide a method, a device, an apparatus and a storage medium for controlling a mopping robot, aiming to solve the problems that the control of the mopping robot is not intelligent and flexible enough in the related technology.

In order to achieve the above objective, the present application provides a method for controlling a mopping robot, which is provided as a mopping robot, the mopping robot is provided with a mopping member, which is provided to mop and clean a floor;

the method for controlling a mopping robot includes the following operations:
if the mopping robot has mopped a first area in a first state with the mopping member at a target degree of cleanliness, and if the mopping member satisfies a cleaning condition, performing a mopping member cleaning operation;
if the mopping robot has mopped a second area in a second state with the mopping member at the target degree of cleanliness, and if the mopping member satisfies the cleaning condition, performing the mopping member cleaning operation;
the mopping member at the target degree of cleanliness is that the mopping member has been cleaned or the mopping member has not been used to clean any floor in which situations the mopping member is at a same degree of dirtiness, being in the first state means being mopped N times by the mopping member, being in the second state means being mopped N+1 times by the mopping member, N is a natural number, when the degree of dirtiness of the mopping member satisfies the cleaning condition and the mopping robot is triggered to perform the mopping member cleaning operation, a size of the first area is smaller than a size of the second area, and the first area and the second area are at a same degree of dirtiness.

In order to achieve the above objective, the present application also proposes a device for controlling a mopping robot, which is provided as a mopping robot, where the mopping robot is provided with a mopping member, the mopping member being configured to mop and clean a floor;

the device for controlling a mopping robot includes:
a first execution module configured to perform a mopping member cleaning operation if the mopping robot has mopped a first area in a first state with the mopping member at a target degree of cleanliness;
a second execution module configured to perform the mopping member cleaning operation if the mopping robot has mopped a second area in a second state with the mopping member at the target degree of cleanliness;
the mopping member at the target degree of cleanliness is that the mopping member has been cleaned or the mopping member has not been used to clean any floor in which situations the mopping member is at a same degree of dirtiness, being in the first state means being mopped N times by the mopping member, being in the second state means being mopped N+1 times by the mopping member, N is a natural number, when the degree of dirtiness of the mopping member satisfies the cleaning condition and the mopping robot is triggered to perform the mopping member cleaning operation, a size of the first area is smaller than a size of the second area, and the first area and the second area are at a same degree of dirtiness.

To achieve the above objective, the present application also proposes an apparatus for controlling a mopping robot, wherein the apparatus for controlling a mopping robot includes: a memory, a processor, and a control program for controlling a mopping robot stored in the memory and executable by the processor, when the control program for controlling a mopping robot is executed by the processor, the following operations are realized:
if the mopping robot has mopped a first area in a first state with the mopping member at a target degree of cleanliness, and if the mopping member satisfies a cleaning condition, performing a mopping member cleaning operation;
if the mopping robot has mopped a second area in a second state with the mopping member at the target degree of cleanliness, and if the mopping member satisfies the cleaning condition, performing the mopping member cleaning operation;
the mopping member at the target degree of cleanliness is that the mopping member has been cleaned or the mopping member has not been used to clean any floor in which situations the mopping member is at a same degree of dirtiness, being in the first state means being mopped N times by the mopping member, being in the second state means being mopped N+1 times by the mopping member, N is a natural number, when the degree of dirtiness of the mopping member satisfies the cleaning condition and the mopping robot is triggered to perform the mopping member cleaning operation, a size of the first area is smaller than a size of the second area, and the first area and the second area are at a same degree of dirtiness.

To achieve the above objective, the present application also proposes a computer-readable storage medium, wherein the computer-readable storage medium stores a control program for controlling a mopping robot, when the control program for controlling a mopping robot is executed by a processor, the following operations are realized:
if the mopping robot has mopped a first area in a first state with the mopping member at a target degree of cleanliness, and if the mopping member satisfies a cleaning condition, performing a mopping member cleaning operation;
if the mopping robot has mopped a second area in a second state with the mopping member at the target degree of cleanliness, and if the mopping member satisfies the cleaning condition, performing the mopping member cleaning operation;
the mopping member at the target degree of cleanliness is that the mopping member has been cleaned or the mopping member has not been used to clean any floor in which situations the mopping member is at a same degree of dirtiness, being in the first state means being mopped N times by the mopping member, being in the second state means being mopped N+1 times by the mopping member, N is a natural number, when the degree of dirtiness of the mopping member satisfies the cleaning condition and the mopping robot is triggered to perform the mopping member cleaning operation, a size of the first area is smaller than a size of the second area, and the first area and the second area are at a same degree of dirtiness.

In embodiments of the present application, during the process of repeatedly mopping a floor with a mopping member, a mopped area before the mopping robot is controlled to execute a latter mopping member cleaning operation is larger than a mopped area before the mopping robot is controlled to execute a former mopping member cleaning operation, thus the control of the robot is more intelligent and flexible.

### BRIEF DESCRIPTION OF THE DRAWINGS

FIG. 1 is a schematic perspective view of a mopping robot provided in an embodiment of the present application;
FIG. 2 is a schematic structural view of the mopping robot provided in the embodiment of the present application after part of a cover is removed;
FIG. 3 is a bottom view of the mopping robot provided in the embodiment of the present application;
FIG. 4 is a schematic structural view of the mopping robot provided in the embodiment of the present application;
FIG. 5 is a front view of a base station provide in an embodiment of the present application;
FIG. 6 is a schematic perspective view of the base station provided in the embodiment of the present application after a top cover is opened;
FIG. 7 is a schematic diagram of the base station provided in the embodiment of the present application;
FIG. 8 is a schematic view of a mopping robot heading toward a base station according to an embodiment of the present application;
FIG. 9 is a schematic view showing a state in which a mopping robot is docked on a base station according to an embodiment of the present application;
FIG. 10 is a flowchart of a method for controlling a mopping robot according to an embodiment of the present application;
FIG. 11 is a schematic structural diagram of a grid map provided in an embodiment of the present application;
FIG. 12 is a schematic diagram showing determining a target map area provided in an embodiment of the present application;
FIG. 13 is a schematic diagram of cleaning values and accumulative cleaning times provided in an embodiment of the present application;
FIG. 14 is a schematic diagram of mopping values and accumulative cleaning times provided in an embodiment of the present application;
FIG. 15 is a schematic structural diagram of a device for controlling a mopping robot according to an embodiment of the present application;
FIG. 16 is a schematic structural diagram of a first execution module provided in an embodiment of the present application;
FIG. 17 is a schematic structural diagram of a second execution module provided in an embodiment of the present application;
FIG. 18 is a schematic structural diagram of the device for controlling a mopping robot according to an embodiment of the present application.

### DETAILED DESCRIPTION OF THE EMBODIMENTS

In order to make the objectives, technical solutions and advantages of the present application more clear, embodiments of the present application will be detailedly described in combination with the drawings.

With the continuous development of smart home technology, various smart home devices emerge as the times require, and mopping robots are one of them. Therefore, how to control a mopping robot is the key to ensure a cleaning effect. For this reason, embodiments of the present application provide a method for controlling a mopping robot, which can be applied to a mopping robot, and the mopping robot can be set to automatically mop and clean the floor, and application situations of the mopping robot can be household indoor cleaning, large-scale place cleaning, etc.

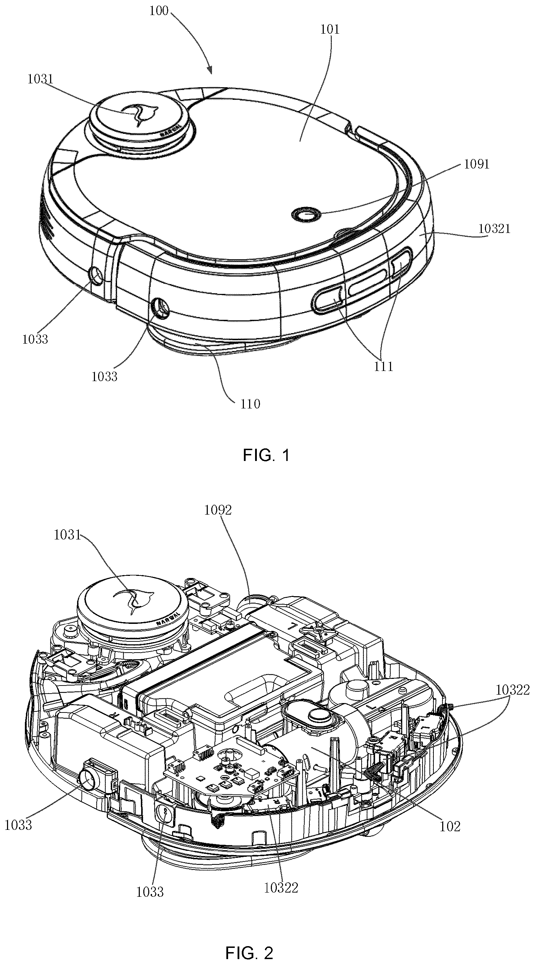

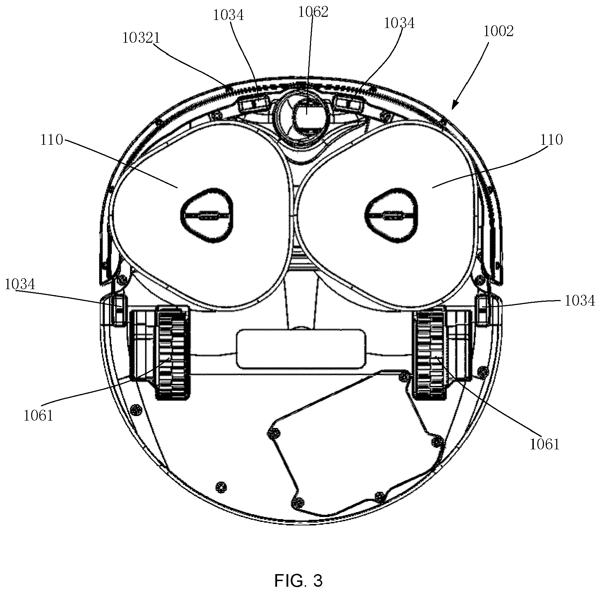

As shown in FIGS. 1 to 4, a mopping robot 100 includes a robot body 101, a driving motor 102, a sensor unit 103, a controller 104, a battery 105, a walking unit 106, a memory 107, a communication unit 108, a robot interaction unit 109, a mopping member 110, a charging member 111, and the like.

The mopping member 110 is configured to mop a floor, and a number of the mopping member 110 may be one or more. The mopping member 110 is, for example, a mop. The mopping member 110 is provided at a bottom of the robot body 101, specifically at a forward position of the bottom of the robot body 101. The driving motor 102 is provided inside the robot body 101, two rotating shafts extend out from the bottom of the robot body 101, and the mopping member 110 is sleeved on the rotating shafts. The driving motor 102 can rotate the rotating shafts, so that the rotating shafts rotate the mopping member 110.

The walking unit 106 is a component related to the movement of the mopping robot 100, and includes driving wheels 1061 and a universal wheel 1062. The universal wheel 1062 and the driving wheels 1061 cooperate to achieve steering and movement of the mopping robot 100. Each of left and right sides of a bottom surface of the robot body 101 is provided with one of the driving wheels 1061 and the driving wheels 1061 are located at rearward positions of the bottom surface of the robot body 101. The universal wheel 1062 is disposed on a center line of the bottom surface of the robot body 101 and located between the two mopping members 110.

Each of the driving wheels 1061 is provided with a driving wheel motor, and the driving wheel 1061 rotates under the driving of the drive wheel motor. The drive wheel 1061 rotates and drives the mopping robot 100 to move. By controlling a rotational speed difference between left and right driving wheels 1061, a steering angle of the mopping robot 100 can be controlled.

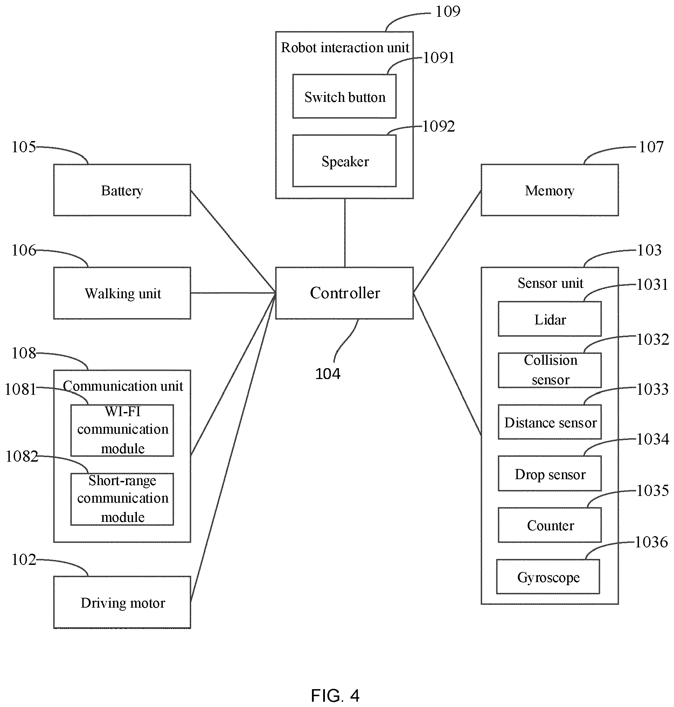

The controller 104 is provided inside the robot body 101, and is configured to control the mopping robot 100 to perform specific operations. The controller 104 may be, for example, a central processing unit (CPU), a microprocessor, or the like. As shown in FIG. 4, the controller 104 is electrically connected to components such as the battery 105, the memory 107, the driving motor 102, the walking unit 106, the sensor unit 103, and the robot interaction unit 109 to control those components.

The robot body 101 is further provided with the charging member 111 configured to obtain power from an external device to charge the battery 105 of the mopping robot 100.

The memory 107 is provided on the robot body 101, and a program is stored in the memory 107. When the program is executed by the controller 104, corresponding operations are realized. The memory 107 is also configured to store parameters used by the mopping robot 100. The memory 107 includes, but is not limited to, a magnetic disk memory, a compact disc read-only memory (CD-ROM), an optical memory, or the like.

The communication unit 108 is provided on the robot body 101, and is configured to allow the mopping robot 100 to communicate with an external device. The communication unit 108 includes, but is not limited to, a Wireless-Fidelity (WI-FI) communication module 1081, a short-range communication module 1082, or the like. The mopping robot 100 may communicate with a terminal by connecting to a WI-FI router through the WI-FI communication module 1081. The mopping robot 100 communicates with a base station through the short-range communication module 1082. The base station is a cleaning device used in conjunction with the mopping robot 100.

The sensor unit 103 provided on the robot body 101 includes various types of sensors, such as a lidar 1031, a collision sensor 1032, a distance sensor 1033, a drop sensor 1034, a counter 1035, and a gyroscope 1036. The collision sensor 1032 includes a collision shell 10321 and a trigger sensor 10322.

The counter 1035 and the gyroscope 1036 are also provided inside the robot body 101. The counter 1035 is configured to accumulate a total angle of rotation of the driving wheels 1061 to calculate a moving distance of the drive wheels 1061 driving the mopping robot 100. The gyroscope 1036 is configured to detect an angle of rotation of the mopping robot 100 so that an orientation of the mopping robot 100 can be determined.

The robot interaction unit 109 is provided on the robot body 101, and a user can interact with the mopping robot 100 through the robot interaction unit 109. The robot interaction unit 109 includes, for example, a switch button 1091, a speaker 1092 and the like. The user may control the mopping robot 100 to start or stop working by pressing the switch button 1091. The mopping robot 100 may play a prompt to the user through the speaker 1092.

It should be understood that the mopping robot 100 described in the embodiments of the present application is only a specific example which does not specifically limit the mopping robot 100 of the embodiments of the present application, and the mopping robot 100 of the embodiments of the present application may be of other specific implementation manners. For example, in other implementation manners, the mopping robot may have more or fewer components than the mopping robot 100 shown in FIG. 1.

The base station 200 is configured for using with the mopping robot 100, for example, the base station 200 may charge the mopping robot 100, the base station 200 may provide a parking position to the mopping robot 100, and the like. The base station 200 may also clean the mopping member 110 of the mopping robot 100, where, the mopping member 110 is provided to mop and clean the floor.

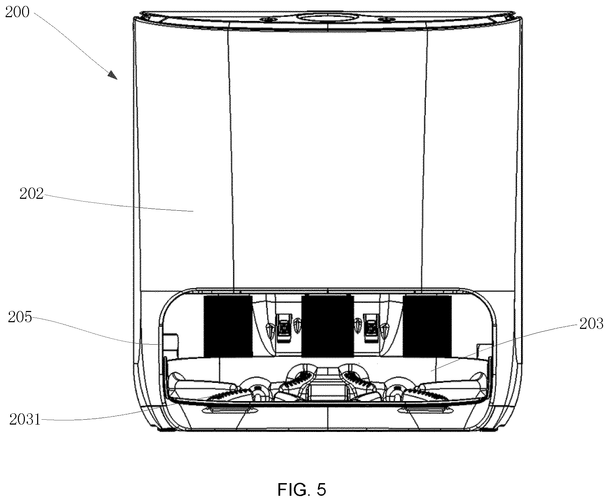

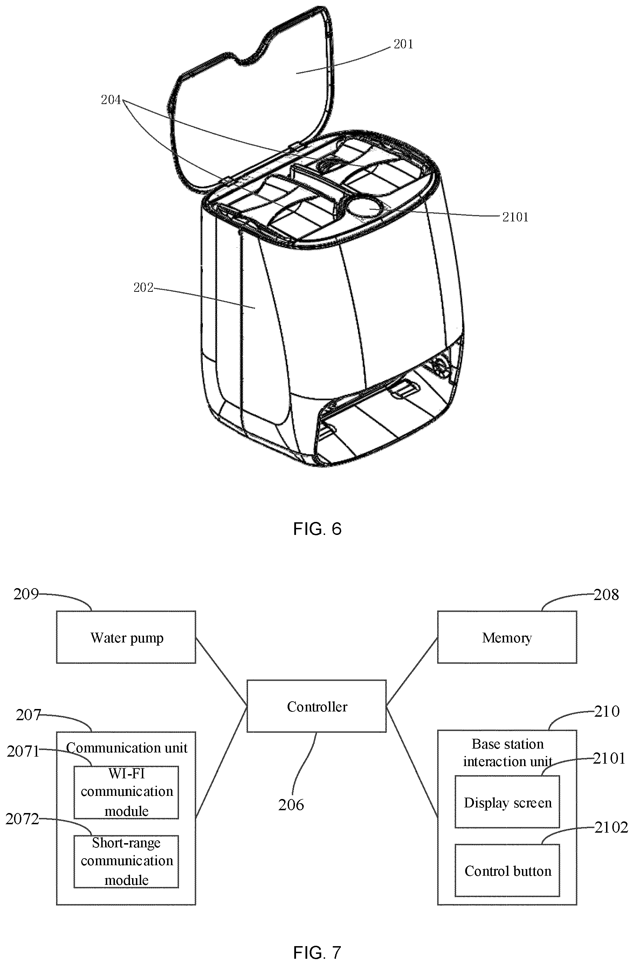

As shown in FIGS. 5 and 6, the base station 200 of the embodiment of the present application includes a base station body 202, a cleaning tank 203, and a water tank 204. The cleaning tank 203 is provided on the base station body 202, and configured to clean the mopping member 110 of the mopping robot. A cleaning rib 2031 provided on the cleaning tank 203 can wipe the mopping member 110. An entrance slot 205 is provided on the base station body 202, and the entrance slot 205 communicates with the cleaning tank 203. The mopping robot 100 may enter the base station 200 through the entrance slot 205 so that the mopping robot 100 is parked at a preset parking position on the base station 200. The water tank 204 is disposed in the base station body 202, and specifically includes a clean water tank and a sewage tank. The clean water tank is configured to store clean water. When the mopping robot 100 is docked on the base station 200, the mopping member 110 of the mopping robot 100 is received in the cleaning tank 203. The clean water tank provides clean water to the cleaning tank 203, and the clean water is provided to clean the mopping member 110. Then, dirty water after cleaning the mopping member 110 is collected into the sewage tank. The base station body 202 is provided with a top cover 201, and the user can take out the water tank 204 from the base station body 202 by opening the top cover 201.

Referring to FIG. 7, the base station 200 of the embodiments of the present application further includes a controller 206, a communication unit 207, a memory 208, a water pump 209, a base station interaction unit 210, and the like. The controller 206 is provided inside the base station body 202, and configured to control the base station 200 to perform specific operations. The controller 206 may be, for example, a central processing unit (CPU), a microprocessor, or the like. The controller 206 is electrically connected to the communication unit 207, the memory 208, the water pump 209, and the base station interaction unit 210. The memory 208 is provided on the base station body 202, and a program is stored in the memory 208. When the program is executed by the controller 206, corresponding operations are implemented. The memory 208 is also configured to store parameters used by base station 200. The memory 208 includes, but is not limited to, a magnetic disk memory, a CD-ROM, an optical memory, or the like. The water pump 209 is provided inside the base station body 202. Specifically, there are two water pumps 209. One of the water pumps 209 is provided to control the clean water tank to supply clean water to the cleaning tank 203, and the other of the water pumps 209 is provided to collect dirty water after cleaning the mopping member 110 to the sewage tank.

The communication unit 207 is provided on the base station body 202, and configured to communicate with external devices. The communication unit 207 includes, but is not limited to, a WI-FI communication module 2071, a short-range communication module 2072, or the like. The base station 200 may communicate with the terminal by connecting the WI-FI router through the WI-FI communication module 2071. The base station 200 may communicate with the mopping robot 100 through the short-range communication module 2072.

The base station interaction unit 210 is configured to interact with the user. The base station interaction unit 210 includes, for example, a display screen 2101 and a control button 2102 provided on the base station body 202, the display screen 2101 is provided to display information to the user, and the control button 2102 is provided for the user to perform a pressing operation to control the startup, shutdown or the like of the base station 200.

The base station body 202 is further provided with a power supply member, and the mopping robot is provided with the charging member 111. When the mopping robot 100 is parked at the preset parking position on the base station 200, the charging member 111 of the mopping robot 100 comes into contact with the power supply member of the base station 200, thereby the base station 200 charges the mopping robot 100. The electric energy of the base station 200 may come from commercial power.

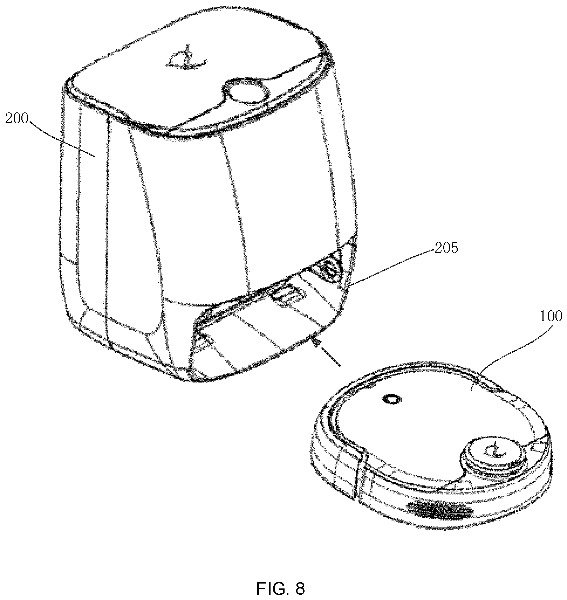

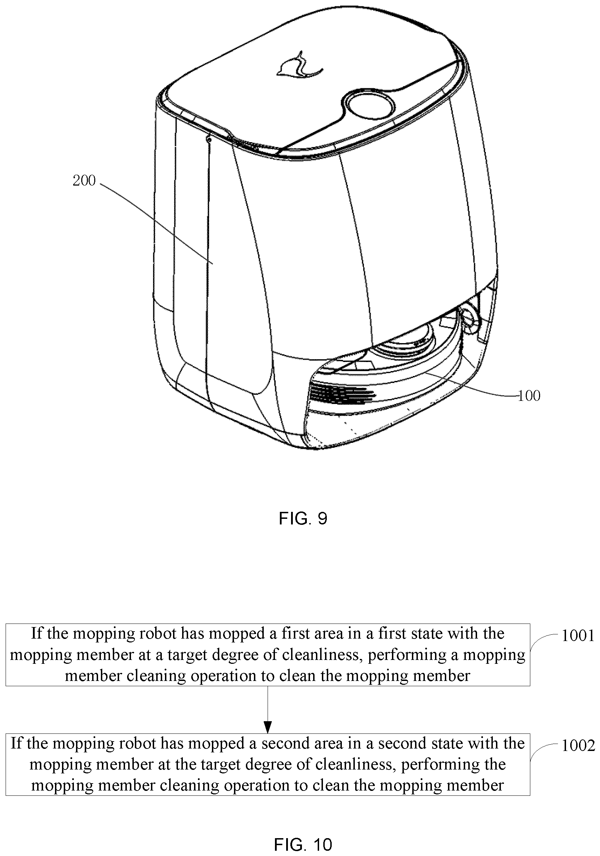

The following is an exemplary description of a process in which the mopping robot 100 and the base station 200 cooperate to work:
the mopping robot 100 cleans a floor of a room. When power of the battery 105 of the mopping robot 100 is less than a preset power threshold, as shown in FIG. 8, the mopping robot 100 automatically drives to the base station 200. The mopping robot 100 enters the base station 200 through the entrance slot 205 of the base station 200 and stops at the preset parking position on the base station 200. The state of the mopping robot 100 docked on the base station 200 can be seen in FIG. 9.

At this time, the charging member 111 of the mopping robot 100 is in contact with the power supply member of the base station 200, and the base station 200 derives power from the commercial power, and charges the battery 105 of the mopping robot 100 through the power supply member and the charging member 111. After the mopping robot 100 is fully charged, the mopping robot 100 leaves the base station 200 and continues to clean the floor of the room.

The mopping robot 100 can be configured to mop and clean the floor. The mopping robot 100 mops the floor of the room for some time. After the mopping member 110 becomes dirty, the mopping robot 100 drives to the base station 200. The mopping robot 100 enters the base station 200 through the entrance slot 205 of the base station 200 and stops at the preset parking position on the base station 200. The state of the mopping robot 100 docked on the base station 200 can be seen in FIG. 9. At this time, the mopping member 110 of the mopping robot 100 is accommodated in the cleaning tank 203. Under the action of the water pump 209, the clean water from the clean water tank in the base station 200 flows to the cleaning tank 203, and is sprayed onto the mopping member 110 through a liquid inlet structure on the cleaning tank 203. At the same time, the mopping member 110 is wiped with the protruding cleaning rib 2031 in the cleaning tank, thereby cleaning the mopping member 110. Dirty water after cleaning the mopping member 110 flows out of the cleaning tank 203 from a liquid discharge structure on the cleaning tank, and is collected into the sewage tank under the action of the water pump 209.

It should be understood that, the base station 200 described in embodiments of the present application is only a specific example which does not specifically limit the base station 200 of the embodiments of the present application. The base station 200 of the embodiments of the present application may be of other specific implementation manners, for example, the base station 200 of the embodiments of the present application may not include the water tank 204, and the base station main body 202 may be connected with a tap water pipe and a drain water pipe, so that the mopping member 110 of the mopping robot 100 is cleaned with tap water from the tap water pipe, and dirty water after cleaning the mopping member 110 flows from the cleaning tank 203 and out of the base station 200 through the drain water pipe. Alternatively, in other implementation manners, the base station may have more or fewer components than the base station 200 shown in FIG. 5.

Based on the above-mentioned mopping robot 100 and base station 200, the embodiments of the present application provide a method for controlling the mopping robot. The method can be applied to a mopping robot which is provided with a mopping member configured to mop and clean a floor. As shown in FIG. 10, the method includes:
Operation 1001, if the mopping robot has mopped a first area in a first state with the mopping member at a target degree of cleanliness, performing a mopping member cleaning operation to clean the mopping member.

The mopping member is arranged to mop and wipe the floor, and a degree of cleanliness of the mopping member indicates a degree of cleanliness of a surface of the mopping member to wipe the floor. The mopping member at the target degree of cleanliness is that the surface of the mopping member to mop and wipe the floor is at a certain cleaning level. For example, the mopping member at the target degree of cleanliness refers to that the mopping member have been cleaned or have not used to clean floor. That is, the mopping member with a lower degree of dirtiness. Being in the first state means being mopped N times by a mopping member, where N is a natural number. It can be seen that when the value of N is 0, the first area in the first state is an area of the floor that has not been mopped by a mopping member; when the value of N is another positive integer (1, 2, 3...), the first area in the first state is an area of the floor that has been mopped by a mopping member. A bottom of the mopping robot is provided with the mopping member and driving wheels. When the mopping robot moves under the drive of the driving wheels, the mopping member slides relative to the floor, thus realizing mopping and cleaning of the floor. The mopping methods of the mopping member include but are not limited to the follows:
mopping method 1: the mopping member is directly fixed at the bottom of the mopping robot and moves with the movement of the mopping robot, thus realizing the mopping of the floor. It can be seen that in this mopping method, a mopping track of the mopping member is same as a movement track of the mopping robot.

Mopping method 2: the mopping robot is provided with a rotating shaft which penetrates the whole mopping robot or is located at the bottom of the mopping robot, the mopping member is indirectly fixed at the bottom of the mopping robot through the rotating shaft. When the mopping robot is moving, the rotating shaft can drive the mopping member to rotate, and sliding friction is generated between the rotating mopping member and the floor, thus realizing mopping the floor. At this time, a mopping track of the mopping member is different from a moving track of the mopping robot.

Mopping method 3: the mopping robot executes the above-mentioned mopping method 1 and the above-mentioned mopping method 2 at the same time. For example, the mopping member is installed on the rotating shaft of the mopping robot, and the mopping robot rotates the mopping member while moving on the floor, so that the mopping member not only moves on the floor together with the movement of the mopping robot but also rotates with the drive of the rotating shaft. Optionally, if the mopping robot has mopped the first area in the first state with the mopping member at the target degree of cleanliness, a mop cleaning operation to cleaning the mopping member is performed, including: if the mopping robot mops the first area in the first state through the mopping member at the target degree of cleanliness, adjusting a mopping value of the mopping member, and the mopping value is set to indicate a degree of dirtiness of the mopping member; if the mopping value satisfies a cleaning condition, performing the mopping member cleaning operation to clean the mopping member. After the mopping member cleaning operation related to cleaning the mopping member is performed, the mopping value of the mopping member is adjusted so that the degree of dirtiness of the mopping member represented by the mopping value is reduced.

Before the mopping robot mops the first area through the mopping member, the mopping member is in a state with the target degree of cleanliness, that is, a state after being cleaned or before cleaning any floor. At this time, the mopping member at the target degree of cleanliness is suitable for cleaning the floor. When the mopping member starts to mop the first area, stains are transferred from the first area to the mopping member, so that the state of the mopping member changes and the degree of dirtiness becomes higher. When the mopping member completes mopping the first area, the mopping value meets the cleaning condition. At this time, the degree of dirtiness of the mopping member is no longer suitable for continuing to clean the floor, and the mopping member needs to be cleaned. Therefore, the mopping robot can be triggered to perform the mopping member cleaning operation to clean the mopping member.

Further, after the mopping member cleaning operation to clean the mopping member is completed, the mopping value of the mopping member is adjusted so that the degree of dirtiness of the mopping member represented by the mopping value is reduced. The reason is that after the mopping member is cleaned, the stains carried by the mopping member are cleaned, and the degree of dirtiness of the mopping member is reduced. Therefore, the mopping value of the mopping member need to be adjusted accordingly, so that the adjusted mopping value does not meet the cleaning condition, and the mopping member can start cleaning the floor again.

Operation 1002, if the mopping robot has mopped a second area in a second state with the mopping member at the target degree of cleanliness, performing the mopping member cleaning operation to clean the mopping member.

According to the above contents, it can be known that the mopping member at the target degree of cleanliness refer to the mopping member after being cleaned or before cleaning any floor. In addition, being in the second state means being mopped N+1 times by a mopping member, where N is a natural number. An area of the first area is smaller than an area of the second area. When the first area and the second area are different target areas, it is satisfied that the first area and the second area are at a same degree of dirtiness, and it can be seen that no matter what the value of N is, the second area in the second state is an area on the floor that has been mopped by the mopping member. Compared with the first area in the first state, the second area in the second state is mopped by a mopping member for more times, so that the second area in the second state is a region with less dirt than the first area in the first state. Alternatively, if the mopping robot has mopped the second area in the second state with the mopping member at the target degree of cleanliness, the mopping member cleaning operation to clean the mopping member is performed, comprising: if the mopping robot mopping the second area in the second state through the mopping member at the target degree of cleanliness, adjusting the mopping value of the mopping member, the mopping value is set to indicate the degree of dirtiness of the mopping member, if the mopping value meets the cleaning condition, performing the mopping member cleaning operation to clean the mopping member. After the mopping member cleaning operation to clean the mopping member is performed, the mopping value of the mopping member is adjusted so that the degree of dirtiness of the mopping member represented by the mopping value is reduced.

Taking mopping the first target area in the first state by the mopping member as a first mopping and mopping the second area in the second state by the mopping member as a second mopping. Since the mopping method of the mopping member mopping the second mopping member is the same as that of the mopping member mopping the first mopping member, the adjustment of the mopping value in the second mopping will not be repeated here. The first mopping and the second mopping are analyzed and explained below:
For a same mopping member, the mopping member has a same target degree of cleanliness before the first mopping and the second mopping are respectively carried out, that is, starting states of the mopping member are the same during the two mopping processes. Correspondingly, after the first and second mopping are completed respectively, the mopping member meets a same cleaning condition, that is, final states of the mopping member are also the same during the two mopping processes. It can be seen that during the two mopping processes, amounts of stains transferred from the first area and the second area to the mopping member are the same. Although the second area is a region with less dirt than the first area, that is, an amount of dirt per unit area of the second area is less than an amount of dirt per unit area of the first area. However, the second area is larger than the first area, so that the total amount of stains in the second area can be the same as the total amount of stains in the first area, so that the amounts of stains transferred to the mopping member during the two mopping processes are the same. That is to say, in the process of repeatedly mopping the floor with the mopping member, a mopped area before the mopping robot is triggered to perform a latter mopping member cleaning operation is larger than a mopped area before the mopping robot is triggered to perform a former mopping member cleaning operation.

Next, adjustment manners of the mopping value during the first mopping and the second mopping are explained. In this embodiment, the degree of dirtiness of the mopping member is expressed by the mopping value. During the mopping process of the mopping member on the floor, the mopping value of the mopping member is adjusted to reflect a change of the degree of dirtiness of the mopping member, and then the mopping member is cleaned based on the mopping value. Among them, the mopping process of the mopping member can be regarded as a process of transferring stains from the floor cleaned by the mopping member to the mopping member. In this process, the degree of dirtiness of the floor cleaned by the mopping member decreases while the degree of dirtiness of the mopping member correspondingly increases. That is, the dirtiness of the mopping member is caused by the floor cleaned by the mopping member, so in an optional embodiment, the dirtiness of the mopping member can be adjusted according to the dirtiness of the floor cleaned by the mopping member.

In this embodiment, an area on the floor cleaned by the mopping member is taken as a target area, and the degree of dirtiness of the target area can be indicated by a cleaning value. The target area includes the first area or the second area. The operation of adjusting a mopping value of the mopping member specifically includes determining a cleaning value of a target area, and adjusting the mopping value of the mopping member according to the cleaning value of the target area.

Optionally, ways of determining the cleaning value of the target area include, but are not limited to, the follows.
1) The cleaning value of the target area is allocated to an area map of areas to be cleaned in advance, so that after a target map area representing the target area is determined from the area map, the cleaning value assigned to the target map area can be determined, and the cleaning value of the target map area is taken as the cleaning value of the target area.
2) The user sets the cleaning value of the target area through other devices, and the mopping robot can directly obtain the cleaning value of the target area from these devices. For example, the user inputs through a smart phone cleaning values of floors of the areas to be cleaned (including the target area) to be 100.
3) The mopping robot determines that the cleaning values of the floors of the areas to be cleaned (including the target area) are preset values according to current mopping times of the areas to be cleaned.

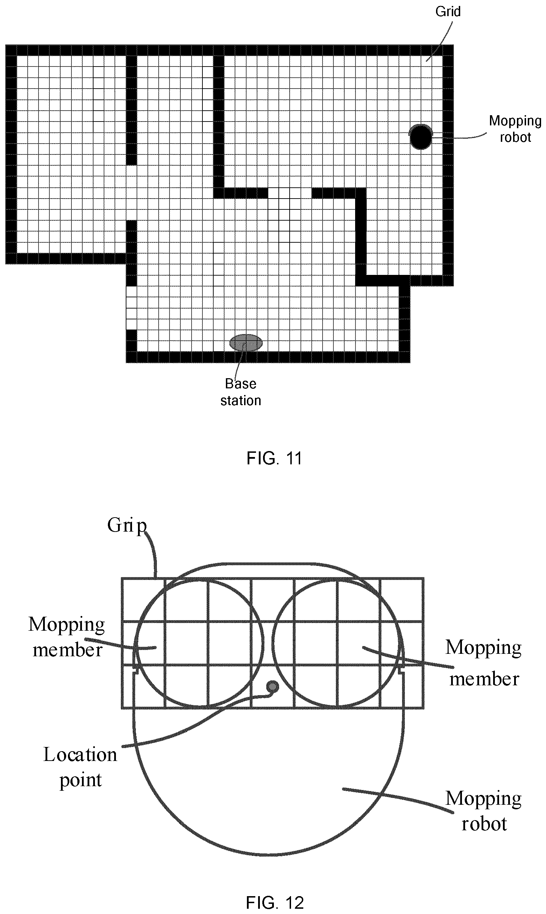

Optionally, in order to conduct accurate analysis of a degree of dirtiness of a specific area to improve the cleaning effect to the floor, the cleaning value can be combined with the area map to determine a cleaning value of the specific area according to the area map. At this time, the operation of determining a cleaning value of the target area includes: acquiring an area map of areas to be cleaned; locating a target map area representing the target area on the area map; determining a cleaning value assigned to the target map area, and taking the cleaning value of the target map area as the cleaning value of the target area. The area map is set as information describing the areas to be cleaned, and optionally, the area map may be a grid map including a plurality of grids, each grid corresponding to a part of the areas to be cleaned. For example, as shown in FIG. 11, white grids represent areas in the areas to be cleaned where the mopping member can mop, i.e., areas accessible to the mopping robot. Black grids indicate areas in the areas to be cleaned where the mopping member cannot mop, i.e. obstacle areas. Of course, the embodiments of the present application do not limit a type of the area map of the areas to be cleaned, and other types of area maps (such as feature maps, topological maps, etc.) may be used to describe the information of the areas to be cleaned. The ways to obtain the area map include but are not limited to those: the mopping robot detects the areas to be cleaned through an installed lidar to obtain the area map; the mopping robot moves along edges of the areas to be cleaned, and obtains the area map according to its moving track; the user inputs the area map to the mopping robot through a terminal; the mopping robot issues an acquisition instruction of the area map to a server, thereby acquiring the area map provided by the server; the mopping robot detects the areas to be cleaned through an installed inertial measurement unit (IMU) and a collision sensor to obtain the area map; the mopping robot senses the areas to be cleaned through an installed visual sensor to obtain the area map, and the like.

Further, in order to determine the cleaning value assigned to the target map area after the area map is acquired, the cleaning values can be allocated to the area map in advance in the following ways:
allocation manner 1: allocating default cleaning values to the area map. For example, before the mopping robot starts mopping, allocating a reference cleaning value, such as 100, to the area map. When the area map is a grid map, each grid is allocated with a reference cleaning value, i.e. by default, all grids has the same degree of dirtiness.

Allocation manner 2: the user directly allocates the cleaning values to the area map. For example, the mopping robot sends the acquired area map to the terminal, and the user allocates the cleaning values through the terminal. When the area map is a grid map, the user can allocate different cleaning values to different grid, or allocate the cleaning values of the grids in batches.

Allocation manner 3: the mopping robot allocates the cleaning values to the area map according to a reference mode. For example, the mopping robot photographs the areas to be cleaned through an image sensor to obtain images of the areas to be cleaned, analyzes the images of the areas to be cleaned to obtain degrees of dirtiness of the areas to be cleaned, and allocates cleaning values corresponding to the degrees of dirtiness of the areas to be cleaned to the area map. When the area map is a grid map, the mopping robot can allocate different cleaning values to different grids, or allocate the cleaning values of the grids in batches.

After acquiring the area map of the areas to be cleaned, a target map area representing the target area is located on the area map. The target area refers to an area cleaned by the mopping member on the floor, and the target map area is an area on the area map corresponding to the target area, that is, the target area is an actual area on the floor, and the target map area is a virtual area on the area map. An optional way to locate a target map area on the area map representing the target area is shown in operations 21 and 22.

Operation 21, acquiring a location point of the mopping robot in the area map.

The location point of the mopping robot in the area map is obtained, in other words, the mopping robot is positioned in the area map. A location point of the mopping robot in the areas to be cleaned are obtained, and the location point in the areas to be cleaned is mapped into the area map, thus obtaining the location point of the mopping robot in the area map. The area map of the areas to be cleaned includes a map reference point, and the map reference point corresponds to an actual reference point in the areas to be cleaned, i.e. the actual reference point is represented by the map reference point on the area map. The actual reference point can be any location point in the areas to be cleaned. During acquiring the location point, it firstly acquires a current location point of the mopping robot in the areas to be cleaned through a positioning device, and calculating location relationship information (location relationship includes but is not limited to information on distance and direction) between the current location point and the actual reference point of the areas to be cleaned.

Secondly, the location relationship information is mapped into the area map to obtain the location relationship information in the area map. For example, when the location relationship information includes information on distance and direction, the mapping method may be reducing or enlarging a distance according to a reference ratio between the area map and the areas to be cleaned to obtain information on distance in the area map, and directly taking the information on direction as information on direction in the area map.

Finally, based on the map reference point of the area map, the location point of the mopping robot in the area map are obtained according to the location relationship information in the area map, and the location point are the current location point of the mopping robot in the area map. For example, taking the area map being a grid map as an example, the process of obtaining the position point of the mopping robot in the area map is illustrated below.

Position (0, 0) in the grid map is taken as the map reference point, and the map reference point (0, 0) corresponds to the actual reference point (x0, y0) in the areas to be cleaned. During acquiring, firstly, the current position point (x1, y1) of the mopping robot in the areas to be cleaned is acquired through the positioning device, and the location relationship information of (x1, y1) and (x0, y0) is calculated; secondly, the location relationship information is mapped into the grid map, assuming that the reference ratio between the grid map and the areas to be cleaned is A, the positional relationship information mapped in the grid map is [(x1-x0)/A, (y1-y0)/A]; finally, taking (0, 0) as the reference point, the location point of the mopping robot in the grid map is obtained as [0 + (x1-x0)/A, 0 + (y1-y0)/A], which is the current location point of the mopping robot in the grid map.

It should be understood that there are other specific implementation manners of operation 21, for example, the mopping robot detects characteristics of the environment by detecting sensors (e.g., lidar, or camera), and then matches the characteristics of the environment with characteristics of rooms represented by the area map to realize the positioning of the mopping robot in the area map. Or, the mopping robot is positioned through inertial sensors or satellite positioning systems, etc.

Operation 22, determining a target map area of the target area based on the location point of the mopping robot in the area map.

After obtaining the location point of the mopping robot in the area map, the target map area of the target area can be determined based on the location point. Specifically, since a position of the mopping robot set to position the mopping robot is fixed, and the location relationship between the position set to position and the location of the mopping member is fixed, the target map area of the target area can be determined based on the location point and the location relationship between the location set to be positioning and the location of the mopping member.

For example, when the area map is a grid map, as shown in FIG. 12, a grid where the location point is located is taken as a reference grid, 3 rows of grids are taken along an advancing direction of the mopping robot, and 3 grids are taken on both the left and right sides of the reference grid perpendicular to the advancing direction of the mopping robot, that is, 21 grids with 3 rows and 7 columns are taken as the target map area of the target area. It should be noted that the target map area may be one or more grids.

From the above, it can be seen that after acquiring the area map of the areas to be cleaned, since the cleaning values has been assigned for the area map, the cleaning value of the target map area in the area map can be directly determined at this time, and the cleaning value of the target map area can be taken as the cleaning value of the target area.

By the way described above, the mopping robot can determine the cleaning value of the target area, and then adjust the mopping value of the mopping member according to the cleaning value of the target area. Among them, in the process of cleaning the floor, the mopping robot can only adjust the mopping value of the mopping member; and it can also adjust both the cleaning value of the target area and the mopping value of the mopping member.

When the target area needs to be cleaned by mopping at least twice, the mopping robot not only adjusts the cleaning value of the target area, but also adjusts the mopping value of the mopping member according to the cleaning value of the target area. The cleaning value can accurately reflect the current degree of dirtiness of the target area, so that the mopping value of the mopping member adjusted according to the cleaning value of the target area is more accurate. As such, embodiments of the present application provide the following implementation manners:
first implementation manner: the cleaning value indicates whether the target area is cleaned, and the degree of dirtiness of the target area after being cleaned is less than the degree of dirtiness of the target area before being cleaned; accordingly, the mopping value indicates an area range that the mopping member cleans. The larger the area range that the mopping member cleans, the higher the degree of dirtiness of the mopping member. After determining the cleaning value of the target area, the implementation manner further includes: if the target area is cleaned by the mopping member, adjusting the cleaning value of the target area from an uncleaned mark to a cleaned mark, thus realizing adjusting the cleaning value of the target area. The uncleaned mark indicates that the target area has not been cleaned by the mopping member, and the cleaned mark indicates that the target area has been cleaned by the mopping member. Embodiments of the present application do not limit expressing ways of the uncleaned mark and the cleaned mark. In an optional embodiment, two different numbers may be used as the uncleaned mark and the cleaned mark, respectively. For example, 1 is used as the uncleaned mark and 0 is used as the cleaned mark. Of course, it may use 0 as the uncleaned mark and 1 as the cleaned mark. In this way, the mopping value of the mopping member is adjusted according to the cleaning value of the target area, including updating the area range that the mopping member cleans according to the adjusted cleaning value of the target area to obtain the adjusted mopping value of the mopping member.

That is to say, when the mopping member completes cleaning the target area, stains in the target area are transferred to the mopping member, and an area range of the target area is added to the area range cleaned by the mopping member, thus increasing the degree of dirtiness of the mopping member. If the target area is cleaned by the mopping member, the cleaning value of the target area is adjusted from the uncleaned mark to the cleaned mark; accordingly, the area range cleaned by the mopping member is updated according to the cleaning value of the target area to obtain the adjusted mopping value of the mopping member. For example, before the target area is cleaned by the mopping member, the cleaning value of the target area is 1, that is, the uncleaned mark is 1, after the target area is cleaned by the mopping member, the cleaning value of the target area is 0, that is, the cleaned mark is 0. If the target area is cleaned by the mopping member, the cleaning value of the target area is adjusted from 1 to 0; accordingly, the mopping value is increased by 1, indicating that the area range of the target area is added to the area range cleaned by the mopping member. It can be seen that the greater the mopping value, the larger the cleaning area that the mopping member cleans, and the higher the degree of dirtiness of the mopping member. Alternatively, before the target area is cleaned by the mopping member, the cleaning value of the target area is 0, that is, the uncleaned mark is 0, and after the target area is cleaned by the mopping member, the cleaning value of the target area is 1, that is, the cleaned mark is 1. If the target area is cleaned by the mopping member, the cleaning value of the target area is adjusted from 0 to 1. Accordingly, reducing the mopping value by 1 indicates that the area range of the target area is increased in the area range cleaned by the mopping member. It can be seen that the smaller the mopping value, the larger the area range cleaned by the mopping member, and the higher the degree of dirtiness of the mopping member.

Second implementation manner: the cleaning value indicates a cleaning time length required for the target area, and the longer the cleaning time length required, the higher the degree of dirtiness of the target area; accordingly, the mopping value indicates a accumulative cleaning time of the mopping member. The longer the accumulative cleaning time, the higher the degree of dirtiness of the mopping member. The method of this implementation manner includes the following operations: calculating a spent cleaning time of the mopping member to clean the target area, adjusting a currently required cleaning time length for the target area according to the spent cleaning time to obtain an adjusted cleaning time length, and taking the adjusted cleaning time length as an adjusted cleaning value of the target area, thereby realizing the adjustment of the cleaning value of the target area. In this way, the mopping value of the mopping member is adjusted according to the cleaning value of the target area, including: if an adjustment amount of cleaning time length of the target area is not equaled to zero, adjusting the mopping value of the mopping member according to the adjustment amount of cleaning time length, and the adjustment amount of cleaning time length is obtained according to the currently required cleaning time length and the adjusted cleaning time length. The cleaning value of the target area is the cleaning time length currently required by the target area before the mopping member starts cleaning the target area. Starting from a time point that the mopping member starts cleaning the target area, the cleaning time of the mopping member has spent to clean the target area is calculated, and the currently required cleaning time length to clean the target area is adjusted according to the spent cleaning time to obtain the adjusted cleaning time length required by the target area, and taking the adjusted cleaning time length required by the target area as the cleaning value of the target area after adjustment.

For example, before the target area is cleaned, the current cleaning time length required for the target area (i.e. the cleaning value of the target area) is 10 seconds, When the mopping member cleans the target area for 6 seconds, the currently required cleaning time length (10 seconds) is adjusted according to the spent cleaning time (6 seconds) to obtain the adjusted cleaning time length of the target area, which is 4 seconds obtained by subtracting 6 seconds from 10 seconds, and the adjusted cleaning time length (4 seconds) is taken as the adjusted cleaning value of the target area, so that the cleaning value of the target area is adjusted from 10 seconds to 4 seconds.

Further, if the adjustment amount of cleaning time length of the target area is not zero, the mopping value of the mopping member is adjusted according to the adjustment amount of cleaning time length, and the adjustment amount of cleaning time length is obtained according to the currently required cleaning time length and the adjusted cleaning time length. If the adjustment amount of cleaning time length of the target area is not zero, it means that the stains in the target area has been transferred to the mopping member, so that the degree of dirtiness of the mopping member increases. If the adjustment amount of cleaning time length of the target area is zero, the stains in the target area has not been transferred to the mopping member, so that the degree of dirtiness of the mopping member cannot be increased. Therefore, when the adjustment amount of cleaning time length of the target area is not zero, the mopping value of the mopping member is adjusted according to the adjustment amount of cleaning time length. For example, still taking that the current cleaning time length required for the target area is 10 seconds and the adjusted cleaning time length is 4 seconds as an example, the adjustment amount of cleaning time length is 6 seconds obtained by subtracting 4 seconds from 10 seconds. Since 6 seconds is not zero, the mopping value is increased by 6 seconds, indicating that the cleaning time of 6 seconds spent for cleaning the target area is added to the accumulative cleaning time of the mopping member, the accumulative cleaning time is increased, and the degree of dirtiness of the mopping member is increased.

Third implementation manner: the cleaning value indicates a total number of cleaning times the target area needs to be cleaned, and the more of the total number of times the target area needs to be cleaned, the higher the degree of dirtiness of the target area. Accordingly, the mopping value indicates an accumulative number of cleaning times of the mopping member. The more the accumulative number of cleaning times, the higher the degree of dirtiness of the mopping member. The method of this implementation manner also includes: calculating a conducted number of cleaning times that the mopping member has cleaned the target area, adjusting a currently required total number of cleaning times for the target area according to the conducted number of cleaning times to obtain an adjusted number of cleaning times, and the adjusted number of cleaning times is taken as the adjusted cleaning value of the target area, thereby realizing the adjustment of the cleaning value of the target area. In this way, the mopping value of the mopping member is adjusted according to the cleaning value of the target area, including: if the adjustment amount of number of cleaning times of the target area is not zero, adjusting the mopping value of the mopping member based on the adjustment amount of number of cleaning times, and the adjustment amount of number of cleaning times is obtained according to the currently required total number of cleaning times and the adjusted number of cleaning times.

The cleaning value of the target area is the total number of times the target area currently needs to be cleaned before the mopping member starts cleaning the target area. Starting from a first time to clean the target area, the conducted cleaning times of the mopping member cleaning the target area is calculated. The currently required total number of cleaning times by the target area are adjusted according to the conducted number of cleaning times to obtain the adjusted number of cleaning times, and the adjusted number of cleaning times are taken as the adjusted cleaning value of the target area.

For example, before the target area is cleaned, the total number of times the target area currently needs to be cleaned (i.e., the cleaning value of the target area) is 10. After the mopping member has cleaned the target area for six times which is the conducted number of cleaning times, the currently required total number of cleaning times (10 times) is adjusted according to the conducted number of cleaning times (6 times), so that the adjusted number of cleaning times is 4 times which is obtained by subtracting 6 times from 10 times, and the adjusted cleaning time length (4 times) is taken as the adjusted cleaning value of the target area, so that the cleaning value of the target area is adjusted from 10 times to 4 times.

Further, if the adjustment amount of cleaning time length of the target area is not zero, the cleaning value of the mopping member is adjusted based on the adjustment amount of number of cleaning times, and the adjustment amount of number of cleaning times is obtained according to the currently required total cleaning number and the adjusted number of cleaning times. If the adjustment amount of number of cleaning times of the target area is not zero, the stains on the target area has been transferred to the mopping member, so that the degree of dirtiness of the mopping member increases. If the adjustment amount of number of cleaning times of the target area is zero, the stains on the target area has not been transferred to the mopping member, so that the degree of dirtiness of the mopping member cannot be increased. Therefore, when the adjustment amount of number of cleaning times of the target area is not zero, the mopping value of the mopping member is adjusted according to the adjustment amount of number of cleaning times. For example, still taking that the total number of times the target area currently needs to be cleaned is 10, and the adjusted number of cleaning times is 4 times as an example, the adjustment amount of number of cleaning times is 6 times which is obtained by subtracting 4 times from 10 times. Since 6 times are not zero, the mopping value is increased by 6 times, indicating that the cleaning times of 6 times of the target area is added to the accumulative number of cleaning times of the mopping member, the accumulative number is increased, and the degree of dirtiness of the mopping member is increased.

Alternatively, after determining the cleaning value of the target area, the method provided by embodiments of the present application further includes: determining an adjustment amount of cleaning value of the target area. Correspondingly, adjusting the mopping value of the mopping member according to the cleaning value of the target area includes: adjusting the mopping value of the mopping member according to the adjustment amount of cleaning value of the target area.

Alternatively, in this embodiment, as to the determination of the adjustment amount of cleaning value of the target area, the cleaning value of the target area can be adjusted from a first cleaning value to a second cleaning value according to cleaning accumulation information, and a difference between the first cleaning value and the second cleaning value can be determined as the adjustment amount of the target area, thereby realizing the determination of the adjustment amount of cleaning value of the target area. It can be seen that the first cleaning value is a cleaning value before the target area is cleaned, and the second cleaning value is a cleaning value after the target area is cleaned. In the case where the higher of the cleaning value indicates the higher of the degree of dirtiness, the first cleaning value is larger than the second cleaning value, and the adjustment amount is a reduction amount of the cleaning value. The realization method of adjusting the mopping value of the mopping member according to the adjustment amount of cleaning value of the target area is that: the mopping value of the mopping member is increased by an increase amount, and the increase amount is equal to the adjustment amount of cleaning value of the target area.

Further, the cleaning accumulation information is one of the total cleaning time and the current number of cleaning times. Next, the above two cases will be described in detail with the first cleaning value being greater than the second cleaning value as an example:
the cleaning accumulation information is the total cleaning time. The total cleaning time refers to the accumulative cleaning time of the mopping member cleaning the target area. The longer the accumulative cleaning time, the lower the degree of dirtiness of the target area and the higher the degree of dirtiness of the mopping member. Accordingly, the first cleaning value is a cleaning value before the target area is cleaned, the second cleaning value is a cleaning value after the target area is cleaned for the accumulative cleaning time, and the cleaning value of the target area decreases with the increasing of the accumulative cleaning time. Further, the cleaning value and the accumulative cleaning time of the target area can have a relationship which can be any of the following three relationships: there is a linear decreasing relationship between the cleaning value and the accumulative cleaning time: for example, the relationship between the cleaning value and the accumulative cleaning time is: V=V0-KT; where V is the second cleaning value, VO is the first cleaning value, T is the accumulative cleaning time, and K is a constant.

It can be seen that the cleaning value decreases uniformly with the increasing of the accumulative cleaning time, and the reduction amount (i.e. the adjustment amount) of the cleaning value does not change with the increasing of the accumulative cleaning time. There is an exponentially decreasing relationship between the cleaning value and the accumulative cleaning time: for example, the relationship between the cleaning value and the accumulative cleaning time is: V=V0/[e ^ (KT)]; where V is the second cleaning value, VO is the first cleaning value, e is the natural constant (the value of e is 2.718), T is the accumulative cleaning time, and K is a constant.

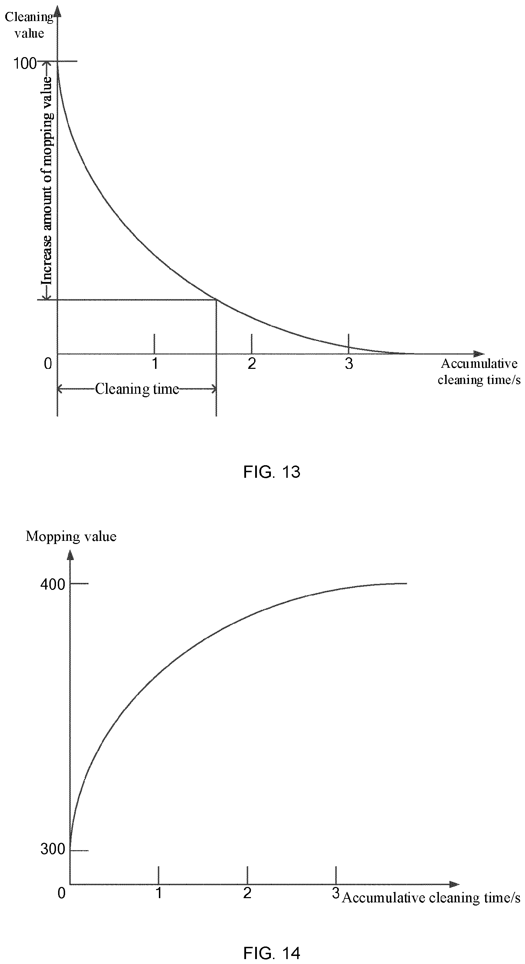

As shown in FIG. 13, it can be seen that with the increasing of the accumulative cleaning time, the reduction amount (i.e., the adjustment amount) of the cleaning value gradually decreases; accordingly, as shown in FIG. 14, the longer the accumulative cleaning time, the smaller the amount of stains transferred from the target area to the mopping value, and an increasing speed of the mopping value gradually slows down. In practical applications, the stains on the floor are mainly transferred to the mopping member in the early stage of mopping. With the increasing of the accumulative cleaning time, the amount of stains transferred to the mopping member becomes smaller and smaller. Therefore, the exponential decreasing relationship between the cleaning value and the accumulative cleaning time is more consistent with the actual situations.
the adjustment amount of cleaning value is inversely proportional to the accumulative cleaning time: when the first cleaning value is greater than the second cleaning value, the adjustment amount of cleaning value is the reduction amount of the cleaning value. Since the adjustment amount of cleaning value is inversely proportional to the accumulative cleaning time, the reduction amount of the cleaning value gradually decreases over equal cleaning time periods with the increasing of the accumulated cleaning time. It can be seen that this situation is similar to the exponential decreasing relationship between the cleaning value and the accumulated cleaning time, which is more consistent with the actual situations.

The cleaning accumulation information is the current number of cleaning times. The current number of cleaning times refer to the accumulative number of cleaning times of the mopping member cleaning the target area. The more the accumulative number of cleaning times, the lower the degree of dirtiness of the target area and the higher the degree of dirtiness of the mopping member. Accordingly, the first cleaning value is a cleaning value before the target area is cleaned, and the second cleaning value is a cleaning value after the target area has been cleaned for the accumulative number of cleaning times, and the cleaning value of the target area decreases with an increase in the accumulative number of cleaning times.

It should be noted that, the cleaning value and the accumulative cleaning times of the target area can also have any one of the following three relationships: a linear decreasing relationship between the cleaning value and the accumulative cleaning times, an exponential decreasing relationship between the cleaning value and the accumulative cleaning times, and an inverse proportional relationship between the adjustment amount of cleaning value and the accumulative cleaning times. The latter two relationships are more consistent with the actual situations. As the principles are the same as those in which the cleaning accumulation information is the accumulative cleaning time, the principles will not be repeated here.

Optionally, when the smaller of the cleaning value indicates the higher of the degree of dirtiness, the first cleaning value is smaller than the second cleaning value, and the adjustment amount is an increase amount of the cleaning value. The method of adjusting the mopping value of the mopping member according to the adjustment amount of cleaning value of the target area is that: the mopping value of the mopping member is reduced by a reduction amount, and the reduction amount is equal to the adjustment amount of cleaning value of the target area. After the adjustment of the mopping value of the mopping member is completed based on any of the above alternative embodiments, if the mopping value satisfies the cleaning condition, it indicates that the degree of dirtiness of the mopping member is no longer suitable for continuing to clean the floor, and the mopping member need to be cleaned, so the mopping robot can be triggered to perform the mopping member cleaning operation related to cleaning the mopping member.

If the mopping value satisfies the cleaning condition, including that the mopping value reaches a mopping threshold, the relevant mopping member cleaning operation can be carried out after the mopping value of the mopping member reaches the referred mopping threshold. It should be noted that when the mopping value is expressed in different ways, the value and the unit of the mopping threshold are also different. For example, when the mopping value indicates the accumulative cleaning time of the mopping member, the mopping threshold is a cleaning time threshold, such as 1000 seconds. When the accumulative cleaning time of the mopping member reaches 1000 seconds, the relevant mopping member cleaning operation is carried out. When the mopping value indicates the accumulative number of cleaning times of the mopping member, the mopping threshold is the cleaning times threshold, such as 500 times. When the accumulative number of cleaning times of the mopping member reaches 500 times, the relevant mopping member cleaning operation is carried out.

In an optional embodiment, performing a mopping member cleaning operation related to cleaning the mopping member includes: controlling the mopping robot to move to a base station to clean the mopping member of the mopping robot by the base station. As shown in FIG. 8, the cleaning method of the base station applied to the mopping member can be that: the mopping robot moves into the base station so that the mopping member at the bottom of the mopping robot is located in the cleaning tank of the base station, the cleaning tank sprays cleaning liquid to the mopping member, and at the same time, sliding friction between the mopping member and the convex ribs of the cleaning tank is controlled to take out, thus realizing the cleaning of the mopping member.

It should be understood, excepting controlling the mopping robot to move to the base station and cleaning the mopping member of the mopping robot through the base station, the mopping member cleaning operation may be another implementation manner. For example, the mopping robot prompts the user to replace the mopping member, such as sending a prompt audio through a speaker on the mopping robot, sending a prompt lamp signal through an indicating light on the mopping robot, or sending a prompt message to the terminal so that the terminal prompts the user to replace the mopping member. In this way, the user can clean the mopping member being replaced. For another example, the mopping member cleaning operation can also be moving the mopping robot to the base station, and automatically replacing the dirty mopping member with a clean mopping member on the base station. The dirty mopping member is automatically cleaned on the base station or is cleaned by the user.

Optionally, the method for controlling the mopping robot provided by the present embodiment further includes: predicting a movement trajectory of the mopping robot from a first position to a second position of the floor before the mopping robot moves from the first position to the second position to clean the floor; and based on the moving trajectory, predicting whether the mopping value of the mopping member satisfies the cleaning condition in the process of the mopping robot moving from the first position to the second position.

Both the first position and the second position are actual positions in the area to be cleaned. Optionally, the movement trajectory of the mopping robot moving from the first position to the second position may be estimated in such a way: the movement trajectory of the mopping robot moving from the first position to the second position is a linear trajectory from the first position to the second position in the absence of an obstacle between the first position and the second position; when there is an obstacle between the first position and the second position, the mopping robot needs to bypass the obstacle and select a non-linear reference trajectory as the moving trajectory from the first position to the second position.

After predicting the movement trajectory, it further predicts the change of the mopping value during the movement of the mopping member along the movement trajectory, the change of the mopping value being a sum of the change of the cleaning values of all the target areas passed during the movement. If the sum of the current mopping value of the mopping member and the predicted change of the mopping value during the movement satisfies the cleaning condition, in the process of moving the mopping robot from the first position to the second position, the mopping value of the mopping member will satisfy the cleaning condition at a point in the middle of the movement, so the mopping member is suitable to clean the floor only before reaching the point. After reaching the point, the mopping member is not suitable to continue cleaning the target areas from the point to the second position because the mopping value of the mopping member has satisfied the cleaning condition.

In this regard, under the condition that the mopping value of the mopping member satisfies the cleaning condition in the process of the mopping robot moving from the first position to the second position according to the prediction, the mopping robot is controlled to move from the first position to the base station so that the base station cleans the mopping member, thus preventing the mopping member from satisfying the cleaning condition in the middle of the movement and ensuring the mopping effect of the mopping member. Further, after the mopping member is cleaned by the base station, the mopping robot is controlled to move from where the base station is located to the second position to ensure that the cleaning of the mopping robot will not affect the subsequent cleaning process.

In summary, the embodiments of the present application in the process of repeatedly mopping the floor with the mopping member, a mopping area before the mopping robot is controlled to perform the mopping member cleaning operation in a next time is larger than a mopping area before the mopping robot is controlled to perform the mopping member cleaning operation in a previous time.

Further, by adjusting the mopping value of the mopping member which indicates the degree of dirtiness of the mopping member, and controlling the mopping robot to carry out the mopping member cleaning operation under the condition that the mopping value satisfies the cleaning condition, it realizes the cleaning of the mopping member based on the degree of dirtiness of the mopping member. Therefore, this control mode is more intelligent and flexible, so that the mopping member can be cleaned in time, and the cleaning effect to the floor is further ensured. Further, the mopping value of the mopping member is adjusted according to the cleaning value, which conforms to the actual cleaning process during which stains are transferred from the floor to the mopping member. In addition, there are many ways to determine the cleaning value, resulting in high flexibility and wide application range.

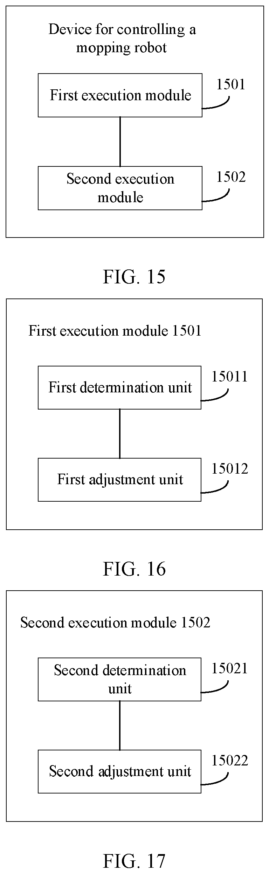

Based on a same application concept, the present embodiments also provide a device for controlling a mopping robot, as shown in FIG. 15, the embodiments of the present application also provide a device for controlling a mopping robot, the device being provided as a mopping robot, the mopping robot being provided with a mopping member, the mopping member being provided to mop the floor. The device includes:
a first execution module 1501 configured to perform a mopping member cleaning operation to clean the mopping member if the mopping robot has mopped a first area in a first state with the mopping member in a target degree of cleanliness; a second execution module 1502 configured to perform the mopping member cleaning operation to clean the mopping member if the mopping robot has mopped a second area in a second state with the mopping member in the target degree of cleanliness. Being in the first state is being mopped by the mopping member for N times, and being in the second state is being mopped by the mopping member for N+1 times, N is a natural number, and an area of the first area is smaller than that of the second area.

Optionally, the first execution module 1501 is configured to adjust a mopping value of the mopping member if the mopping robot mopping the first area in the first state with the mopping member at the target degree of cleanliness, the mopping value being set to indicate a degree of dirtiness of the mopping member, perform the mopping member cleaning operation to clean the mopping member if the mopping value meets a cleaning condition, and update the mopping value of the mopping member after the mopping member cleaning operation to clean the mopping member is completed, so that the degree of dirtiness of the mopping member represented by the mopping value is reduced.

The second execution module 1502 is configured to adjust the mopping value of the mopping member if the mopping robot mops the second area in the second state with the mopping member in the target degree of cleanliness, the mopping value being set to indicate the degree of dirtiness of the mopping member, perform the mopping member cleaning operation to clean the mopping member if the mopping value meets the cleaning condition, and update the mopping value of the mopping member after the mopping member cleaning operation to clean the mopping member is completed, so that the degree of dirtiness of the mopping member represented by the mopping value is reduced.

Optionally, referring to FIG. 16, the first execution module 1501 includes: a first determination unit 15011 configured to determine a cleaning value of the first area, the first area being an area on the floor cleaned by the mopping member, the cleaning value being set to represent a degree of dirtiness of the first area; a first adjustment unit 15012 configured to adjust the mopping value of the mopping member according to the cleaning value of the first area. As shown in FIG. 17, the second execution module 1502 includes: a second determination unit 15021 configured to determine a cleaning value of the second area, the second area being an area on the ground cleaned by the mopping member, the cleaning value being configured to represent a degree of dirtiness of the second area; a second adjustment unit 15022 configured to adjust the mopping value of the mopping member according to the cleaning value of the second area.

Optionally, the first determination unit 15011 is configured to acquire an area map of an area to be cleaned; determines a first map area representing the first area on the area map; determine a cleaning value allocated to the first map area, and take the cleaning value of the first map area as the cleaning value of the first area. The second determination unit 15021 is configured to acquire an area map of an area to be cleaned; determine a second map area representing the second area on the area map; determine a cleaning value allocated to the second map area, and take the cleaning value of the second map area as the cleaning value of the second area.

Optionally, the cleaning value indicates whether the target area is cleaned, a degree of dirtiness of an area being cleaned is less than a degree of dirtiness of an area not being cleaned. The mopping value indicates an area range cleaned by the mopping member, the greater the area range cleaned by the mopping member, the higher the degree of dirtiness of the mopping member. The target area is the first area or the second area.

The first determination unit 15011 is further configured to adjust the cleaning value of the first area from an uncleaned mark to a cleaned mark after the first area is cleaned by the mopping member. The first adjustment unit 15012 is configured to update the area range to be cleaned by the mopping member according to the adjusted cleaning value of the first area to obtain the adjusted mopping value of the mopping member. The second determination unit 15021 is further configured to adjust the cleaning value of the second area from an uncleaned mark to a cleaned mark after the second area is cleaned by the mopping member. The second adjustment unit 15022 is configured to update the area range to be cleaned by the mopping member according to the adjusted cleaning value of the second area to obtain the adjusted mopping value of the mopping member.

Optionally, the cleaning value indicates a cleaning time length required for the target area, and the longer the cleaning time length required, the higher the degree of dirtiness of the target area. The mopping value indicates an accumulative cleaning time of the mopping member. The longer the accumulative cleaning time, the higher the degree of dirtiness of the mopping member. The target area is the first area or the second area.

The first determination unit 15011 is further configured to calculate a spent cleaning time length for cleaning the first area by the mopping member, adjust a currently required cleaning time length for the first area according to the spent cleaning time length to obtain an adjusted cleaning time length, and take the adjusted cleaning time length as the adjusted cleaning value of the first area. The first adjustment unit 15012 is configured to adjust the mopping value of the mopping member according to an adjustment amount of cleaning time length if the adjustment amount of cleaning time length of the first area is not zero. The adjustment amount of cleaning time length is obtained according to the currently required cleaning time length and the adjusted cleaning time length.

The second determination unit 15021, is further configured to calculate a spent cleaning time length for cleaning the second area by the mopping member, adjust a currently required cleaning time length for the second area according to the spent cleaning time length to obtain an adjusted cleaning time length, and take the adjusted cleaning time length as the adjusted cleaning value of the second area. The second adjustment unit 15022 is configured to adjust the mopping value of the mopping member according to an adjustment amount of cleaning time length if the adjustment amount of cleaning time length of the second area is not zero. The adjustment amount of cleaning time length is obtained according to the currently required cleaning time length and the adjusted cleaning time length.

Optionally, the cleaning value indicates a total number of cleaning times the target area needs to be cleaned, and the more the total number of times the target area needs to be cleaned, the higher the degree of dirtiness of the target area. The mopping value indicates an accumulative number of cleaning times of the mopping member. The more the accumulative number of cleaning times, the higher the degree of dirtiness of the mopping member. The target area is the first area or the second area.

The first determination unit 15011 is further configured to calculate a conducted number of cleaning times that the mopping member has cleaned the target area, adjust a currently required total number of cleaning times for the target area according to the conducted number of cleaning times to obtain an adjusted number of cleaning times, and taking the adjusted number of cleaning times as the adjusted cleaning value of the first area. The second determination unit 15021 is configured to adjust the mopping value of the mopping member based on an adjustment amount of number of cleaning times if the adjustment amount of number of cleaning times of the target area is not zero. The adjustment amount of number of cleaning times is obtained according to the current required total number of cleaning times and the adjusted number of cleaning times. The second determination unit 15021 is further configured to calculate a conducted number of cleaning times that the mopping member has cleaned the second area, adjust a currently required total number of cleaning times for the second area according to the conducted number of cleaning times to obtain an adjusted number of cleaning times, and taking the adjusted number of cleaning times as the adjusted cleaning value of the second area. The second determination unit 15021 is configured to adjust the mopping value of the mopping member based on an adjustment amount of number of cleaning times if the adjustment amount of number of cleaning times of the target area is not zero. The adjustment amount of number of cleaning times is obtained according to the current required total number of cleaning times and the adjusted number of cleaning times. Optionally, the first determination unit 15011 is further configured to determine an adjustment amount of the cleaning value of the first area.

The first adjustment unit 15012 is configured to adjust the mopping value of the mopping member according to the adjustment amount of the cleaning value of the first area. The second determination unit 15021 is further configured to determine an adjustment amount of the cleaning value of the second area. The second adjustment unit 15022 is configured to adjust the mopping value of the mopping member according to the adjustment amount of the cleaning value of the second area.

Optionally, the first determination unit 15011 is also configured to adjust the cleaning value of the first area from a first cleaning value to a second cleaning value according to cleaning accumulation information. The cleaning accumulation information is the total cleaning time or the current number of cleaning times, the total cleaning time is the accumulative cleaning time of the mopping member has spent to clean the first area, and the current number of cleaning times is the accumulative number of cleaning times of the mopping member has cleaned the first area.

A difference between the first cleaning value and the second cleaning value is determined as the adjustment amount of cleaning value of the first area. The second determination unit 15021 is also configured to adjust the cleaning value of the second area from a first cleaning value to a second cleaning value according to cleaning accumulation information. The cleaning accumulation information is the total cleaning time or the current number of cleaning times, the total cleaning time is the accumulative cleaning time of the mopping member has spent to clean the second area, and the current number of cleaning times is the accumulative number of cleaning times of the mopping member has cleaned the second area. A difference between the first cleaning value and the second cleaning value is determined as the adjustment amount of cleaning value of the second area.

Optionally, the cleaning value and the cleaning accumulation information have a linear decreasing relationship; or, the cleaning value and the cleaning accumulation information has an exponential decreasing relationship; or, the adjustment amount is inversely proportional to the cleaning accumulation information.

Optionally, the second cleaning value is less than the first cleaning value. The first adjustment unit 15012 is configured to increase the mopping value of the mopping member by an increase amount equal to the adjustment amount of cleaning value of the first area. The second adjustment unit 15022 is configured to increase the mopping value of the mopping member by an increase amount equal to the adjustment amount of cleaning value of the second area.

Optionally, the first execution module 1501 and the second execution module 1502 is configured to control the mopping robot to move to the base station to clean the mopping member of the mopping robot through the base station.

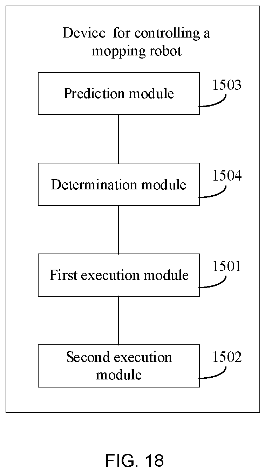

Optionally, referring to FIG. 18, the device further includes: a prediction module 1503 configured to predict a movement trajectory of the mopping robot from the first position to the second position of the floor before the mopping robot moves from the first position to the second position for cleaning of the floor.

The determination module 1504 is further configured to predict whether the mopping value of the mopping member satisfies the cleaning condition during the mopping robot's movement from the first position to the second position based on the movement trajectory.

The first execution module 1501 and the second execution module 1502 is further configured to control the mopping robot to move from the first position to the base station to cause the base station to clean the mopping member if a prediction result is that the mop value of the mopping member satisfies the cleaning condition during the mopping robot moving from the first position to the second position. The first execution module 1501 and the second execution module 1502 is further configured to control the mopping robot to move from where the base station is located to the second position after the mopping member is cleaned by the base station.

Optionally, the mopping member at the target degree of cleanliness is that the mopping member has been cleaned or has not been used to clean the floor. Optionally, the mopping value satisfying the cleaning condition includes that the mopping value reaches a mopping threshold. Optionally, the area map of the areas to be cleaned is a grid map represented by a plurality of grids. The first map area or the second map area are represented by grids. To sum up, in the process of repeatedly mopping the floor with the mopping member, the mopped area before the mopping robot is controlled to perform a latter mopping member cleaning operation is larger than the mopped area before the mopping robot is controlled to perform a former mopping member cleaning operation according to embodiments of the present application.

Further, by adjusting the mopping value of the mopping member which indicates the degree of dirtiness of the mopping member, and controlling the mopping robot to carry out the mopping member cleaning operation under the condition that the mopping value satisfies the cleaning condition, it realizes the cleaning of the mopping member based on the degree of dirtiness of the mopping member. Therefore, this control mode is more intelligent and flexible, so that the mopping member can be cleaned in time, and the cleaning effect to the floor is further ensured.

Further, the mopping value of the mopping member is adjusted according to the cleaning value of the floor, which conforms to the actual cleaning process during which stains are transferred from the floor to the mopping member. In addition, there are many ways to determine the cleaning value, resulting in high flexibility and wide application range. It should be noted that, when the device provided by the above embodiment realizes its functions, it is only illustrated by the division of the above functional modules. In practical application, the above functions can be assigned to and completed by different functional modules according to needs, i.e. the internal structure of the device can be divided and assigned into different functional modules to complete all or part of the above described functions. In addition, the embodiments of the device and the method embodiments provided above are under the same concept, and the specific implementation process is detailed in the method embodiments and will not be repeated here.

Based on a same concept, the present embodiment provides an apparatus for controlling a mopping robot, the apparatus for controlling the mopping robot includes a memory, a processor and a control program for controlling a mopping robot stored in the memory and executable by the processor. When the control program for controlling a mopping robot is executed by the processor, the method for controlling a mopping robot according to the above embodiment is realized.

Based on the same concept, the present embodiment provides a computer-readable storage medium storing a control program for controlling a mopping robot, the control program for controlling a mopping robot causes a processor to perform the method for controlling a mopping robot described in the above-described embodiment when running on the computer.

The introduction of the apparatus for controlling a mopping robot and the computer readable storage medium provided by the embodiment of the application can make reference to the embodiments of the method for controlling a mopping robot, and will not be described here. All the above-mentioned optional technical schemes can be combined arbitrary to form alternative embodiments of the present disclosure, which will not be repeated here.

As will be appreciate by those of ordinary skill in that art, all or part of the operations for implement the above-described embodiments may be accomplished by hardware, or be accomplished by a program instructing associated hardware. The program may be stored in a computer-readable storage medium, which may be a read only memory, a magnetic disk, an optical disk, or the like.

The foregoing is merely embodiments of this application and is not intended to limit this application. Any modification, equivalent replacement, improvement, etc. made within the spirit and principles of this application shall be included within the claimed scope of this application.

## Claims

1. A method for controlling a mopping robot, which is applied for a mopping robot, wherein the mopping robot is provided with a mopping member for mopping and cleaning a floor;
the method for controlling a mopping robot comprises:
if the mopping robot has mopped a first area in a first state with the mopping member at a target degree of cleanliness, and if the mopping member satisfies a cleaning condition, performing a mopping member cleaning operation; and
if the mopping robot has mopped a second area in a second state with the mopping member at the target degree of cleanliness, and if the mopping member satisfies the cleaning condition, performing the mopping member cleaning operation;
wherein the mopping member at the target degree of cleanliness is that the mopping member has been cleaned or the mopping member has not been used to clean any floor in which situations the mopping member is at a same degree of dirtiness, being in the first state means being mopped N times by the mopping member, being in the second state means being mopped N+1 times by the mopping member, N is a natural number, when the degree of dirtiness of the mopping member satisfies the cleaning condition and the mopping robot is triggered to perform the mopping member cleaning operation, a size of the first area is smaller than a size of the second area, and the first area and the second area are at a same degree of dirtiness.

2. The method for controlling a mopping robot according to claim 1, wherein the operation of if the mopping robot mops the first area in the first state with the mopping member at a target degree of cleanliness, performing the mopping member cleaning operation comprises:
if the mopping robot has mopped the first area in the first state through the mopping member at the target degree of cleanliness, adjusting a mopping value of the mopping member, the mopping value being configured to indicate a degree of dirtiness of the mopping member;
if the mopping value satisfies the cleaning condition, performing the mopping member cleaning operation;
after the mopping member cleaning operation is completed, updating the mopping value of the mopping member to reduce the degree of dirtiness of the mopping member represented by the mopping value;
wherein the mopping value satisfying the cleaning condition comprises that the mopping value reaches a mopping threshold.

3. The method for controlling the mopping robot according to claim 2, wherein the operation of if the mopping robot has mopped a second area in a second state with the mopping member at the target degree of cleanliness, performing the mopping member cleaning operation comprises:
if the mopping robot mops the second area in the second state through the mopping member at the target degree of cleanliness, adjusting the mopping value of the mopping member, the mopping value being configured to indicate the degree of dirtiness of the mopping member;
if the mopping value satisfies the cleaning condition, performing the mopping member cleaning operation;
after the mopping member cleaning operation is completed, updating the mopping value of the mopping member to reduce the degree of dirtiness of the mopping member represented by the mopping value;
wherein the mopping value satisfying the cleaning condition comprises that the mopping value reaches the mopping threshold.

4. The method for controlling a mop robot according to claim 3, wherein the operation of adjusting the mopping value of the mop member comprises:
determining a cleaning value of a target area, the target area being an area on the floor cleaned by the mopping member, the cleaning value being configured to indicate a degree of dirtiness of the target area;
adjusting the mopping value of the mopping member according to the cleaning value of the target area;
wherein the target region is the first area or the second area.

5. The method for controlling a mopping robot according to claim 4, wherein the operation of determining a cleaning value of a target area comprises:
acquiring an area map of areas to be cleaned;
locating a target map area representing the target area on the area map;
determining a cleaning value assigned to the target map area in advance, and taking the cleaning value of the target map area as the cleaning value of the target area.

6. The method for controlling a mopping robot according to claim 4, wherein, after the operation of determining a cleaning value of a target area, the method for controlling the mopping robot further comprises:
determining an adjustment amount of cleaning value of the target area;
wherein the operation of adjusting the mopping value of the mopping member according to the cleaning value of the target area comprises:
adjusting the mopping value of the mopping member according to the adjustment amount of cleaning value of the target area.

7. The method for controlling a mopping robot according to claim 6, wherein the operation of determining an adjustment amount of cleaning value of the target area comprises:
adjusting the cleaning value of the target area from a first cleaning value to a second cleaning value according to cleaning accumulation information, wherein the cleaning accumulation information is a total cleaning time or a current number of cleaning times, wherein the total cleaning time is an accumulative cleaning time of the mopping member has cleaned the target area, and the current number of cleaning times is an accumulative number of cleaning times of the mopping member has cleaned the target area; and
determining a difference between the first cleaning value and the second cleaning value as an adjustment amount of cleaning value of the target area.

8. The method for controlling a mopping robot according to claim 7, wherein,
the cleaning value and the cleaning accumulation information have a linear decreasing relationship; or
the cleaning value and the cleaning accumulation information have an exponentially decreasing relationship; or
the adjustment amount is inversely proportional to the cleaning accumulation information.

9. The method for controlling a mopping robot according to claim 1, wherein the operation of performing a mopping member cleaning operation comprises:
controlling the mopping robot to move to a base station to clean the mopping member of the mopping robot through the base station.

10. A device for controlling a mopping robot, which is applied a mopping robot, wherein the mopping robot is provided with a mopping member for mopping and cleaning a floor;
the device for controlling a mopping robot comprises:
a first execution module configured to perform a mopping member cleaning operation if the mopping robot has mopped a first area in a first state with the mopping member at a target degree of cleanliness;
a second execution module configured to perform the mopping member cleaning operation if the mopping robot has mopped a second area in a second state with the mopping member at the target degree of cleanliness;
wherein the mopping member at the target degree of cleanliness is that the mopping member has been cleaned or the mopping member has not been used to clean any floor in which situations the mopping member is at a same degree of dirtiness, being in the first state means being mopped N times by the mopping member, being in the second state means being mopped N+1 times by the mopping member, N is a natural number, when the degree of dirtiness of the mopping member satisfies the cleaning condition and the mopping robot is triggered to perform the mopping member cleaning operation, a size of the first area is smaller than a size of the second area, and the first area and the second area are at a same degree of dirtiness.

11. The control device of the mopping robot according to claim 10, wherein, the first execution module is further configured to adjust a mopping value of the mopping member if the mopping robot mops the first area in the first state with the mopping member at the target degree of cleanliness, the mopping value being configured to indicate a degree of dirtiness of the mopping member, and perform the mopping member cleaning operation if the mopping value satisfies the cleaning condition.

12. The device for controlling a mopping robot according to claim 11, wherein, the second execution module is further configured to adjust the mopping value of the mopping member if the mopping robot mops the second area in the second state through the mopping member at the target degree of cleanliness, the mopping value being configured to indicate the degree of dirtiness of the mopping member, and perform the mopping member cleaning operation if the mopping value satisfies the cleaning condition.

13. The device for controlling a mopping robot according to claim 12, wherein the first execution module is further configured to update the mopping value of the mopping member to reduce the degree of dirtiness of the mopping member represented by the mopping value after the mopping member cleaning operation is completed;
the second execution module is further configured to update the mopping value of the mopping member to reduce the degree of dirtiness of the mopping member represented by the mopping value after the mopping member cleaning operation is completed.

14. The device for controlling a mopping robot according to claim 13, wherein the first execution module comprises:
a first determination unit configured to determine a cleaning value of the first area, the first area being an area on the floor cleaned by the mopping member, the cleaning value being configured to indicate a degree of dirtiness of the first area;
a first adjustment unit configured to adjust the mopping value of the mopping member according to the cleaning value of the first area;
wherein the second execution module comprises:
a second determination unit configured to determine a cleaning value of the second area, the second area being an area on the floor cleaned by the mopping member, the cleaning value being configured to indicate a degree of dirtiness of the second area;
a second adjustment unit configured to adjust the mopping value of the mopping member according to the cleaning value of the second area.

15. The device for controlling a mopping robot according to claim 14, wherein the first determination unit is further configured to acquire an area map of areas to be cleaned, locate a first map area representing the first area on the area map, determine a cleaning value assigned to the first map area in advance, and take the cleaning value of the first map area as the cleaning value of the first area; and
the second determination unit is further configured to acquire the area map of areas to be cleaned, locate a second map area representing the second area on the area map, determine a cleaning value assigned to the second map area in advance, and take the cleaning value of the second map area as the cleaning value of the second area.

16. The device for controlling a mopping robot according to claim 15, wherein the first determination unit is further configured to determine an adjustment amount of cleaning value of the first area;
the first adjustment unit is further configured to adjust the mopping value of the mopping member according to an adjustment amount of cleaning value of the first area;
the second determination unit is further configured to determine an adjustment amount of cleaning value of the second area; and
the second adjustment unit is further configured to adjust the mopping value of the mopping member according to the adjustment amount of cleaning value of the second area.

17. The device for controlling a mopping robot according to claim 10, wherein the first execution module or the second execution module is further configured to control the mop robot to move to a base station to clean the mop member of the mop robot through the base station.

18. The device for controlling a mopping robot according to claim 12, wherein the mopping value satisfying the cleaning condition comprises that the mopping value reaches the mopping threshold.

19. An apparatus for controlling a mopping robot comprising a memory, a processor and a control program for controlling a mopping robot stored in the memory and operable on the processor, wherein when the control program for controlling a mopping robot is executed by the processor, the following operations are realized:
if the mopping robot has mopped a first area in a first state with the mopping member at a target degree of cleanliness, and if the mopping member satisfies a cleaning condition, performing a mopping member cleaning operation;
if the mopping robot has mopped a second area in a second state with the mopping member at the target degree of cleanliness, and if the mopping member satisfies the cleaning condition, performing the mopping member cleaning operation;
wherein the mopping member at the target degree of cleanliness is that the mopping member has been cleaned or the mopping member has not been used to clean any floor in which situations the mopping member is at a same degree of dirtiness, being in the first state means being mopped N times by the mopping member, being in the second state means being mopped N+1 times by the mopping member, N is a natural number, when the degree of dirtiness of the mopping member satisfies the cleaning condition and the mopping robot is triggered to perform the mopping member cleaning operation, a size of the first area is smaller than a size of the second area, and the first area and the second area are at a same degree of dirtiness.

20. A computer-readable storage medium storing a control program for controlling a mopping robot, wherein when the control program for controlling a mopping robot is executed by a processor, the following operations are realized:
if the mopping robot has mopped a first area in a first state with the mopping member at a target degree of cleanliness, and if the mopping member satisfies a cleaning condition, performing a mopping member cleaning operation;
if the mopping robot has mopped a second area in a second state with the mopping member at the target degree of cleanliness, and if the mopping member satisfies the cleaning condition, performing the mopping member cleaning operation;
wherein the mopping member at the target degree of cleanliness is that the mopping member has been cleaned or the mopping member has not been used to clean any floor in which situations the mopping member is at a same degree of dirtiness, being in the first state means being mopped N times by the mopping member, being in the second state means being mopped N+1 times by the mopping member, N is a natural number, when the degree of dirtiness of the mopping member satisfies the cleaning condition and the mopping robot is triggered to perform the mopping member cleaning operation, a size of the first area is smaller than a size of the second area, and the first area and the second area are at a same degree of dirtiness.
